# EUROPÄISCHE PATENTSCHRIFT

(11) **EP 1 023 153 B1**
(45) Veröffentlichungstag und Bekanntmachung des Hinweises auf die Patenterteilung: **26.03.2003**
(21) Anmeldenummer: 98965620.2
(22) Anmeldetag: 07.10.1998
(51) Int. Cl.: B29C 45/68

(54) **FORMSCHLIESSEINHEIT FÜR EINE SPRITZGIESSMASCHINE**
MOULD-CLOSING UNIT FOR AN INJECTION MOULDING MACHINE
UNITE DE FERMETURE DE MOULE POUR UNE MACHINE DE MOULAGE PAR INJECTION

(30) Priorität: 13.10.1997 DE 19744986
(43) Veröffentlichungstag der Anmeldung: 02.08.2000
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: EP9806371
(87) Internationale Veröffentlichungsnummer: WO99019130

(56) Entgegenhaltungen:
- EP-A- 0 655 309
- DE-A- 19 616 452
- FR-A- 2 147 425

## Beschreibung

Die Erfindung betrifft eine Formschließeinheit für eine Spritzgießmaschine zur Verarbeitung von Kunststoffen und anderen plastifizierbaren Massen wie z.B. Kunststoffe, pulverförmige Massen oder keramische Massen nach dem Oberbegriff des Anspruches 1.

Eine derartige Formschließeinheit ist aus der DE 43 40 693 C2 bekannt und dient im wesentlichen zur Bewegung des beweglichen Formträgers auf den stationären Formträger zu, um dabei die Gießform zu schließen. Außer der für diese Bewegung erforderlichen Kolben-Zylinder-Einheit sind ferner dort zwei Druckzylinder zum Aufbau des Zuhaltedrucks während des Einspritzvorgangs vorgesehen. Um eine zentrale Anordnung des Hydraulikblocks zu ermöglichen, ohne daß zusätzliche Leitungen zu den einzelnen Verbrauchern zu führen sind, wird dort das Abstützelement für die Formschließeinheit zugleich als Verteiler für das Hydraulikmedium eingesetzt. Um jedoch die Abstützwirkung des Abstützelements dort nicht zu stören, wird dem Abstützelement ein gesonderter Hydraulikblock zugeordnet, der auf dem Abstützelement angeordnet ist. Um daher eine Verteilung des Hydraulikmediums zu ermöglichen, sind verhältnismäßig lange Bohrungen innerhalb des Abstützelements erforderlich.

Ausgehend von diesem Stand der Technik liegt der vorliegenden Erfindung die Aufgabe zugrunde, eine Formschließeinheit der eingangs genannten Gattung derart weiterzubilden, daß ein kompakterer Aufbau der Formschließeinheit unter Verkürzung der Bohrungen für die Hydraulikleitungen verwirklicht wird.

Diese Aufgabe wird durch eine Formschließeinheit mit den Merkmalen des Anspruches 1 gelöst.

Das Abstützelement der Formschließeinheit besteht nun aus mehreren Abstützsegmenten, die zwischen sich den Hydraulikblock aufnehmen. Um dennoch eine gewisse innere Stabilität zu erzielen, sind die Abstützsegmente und der Hydraulikblock über Befestigungsmittel miteinander verbunden. Die Abstützsegmente selbst können dadurch einfacher ausgebildet werden, da nur noch funktionale Bohrungen, also Bohrungen, die tatsächlich auch für die Übertragung von Hydraulikmedium benötigt werden, eingebracht werden müssen, da aufgrund der geringeren Abmessungen entsprechend präzise Bohrungen auch nur von einer Seite gebohrt werden können. Mit der Anordnung des Hydraulikblocks zwischen den beiden Abstützsegmenten kann nicht nur auf flexible Leitungen verzichtet werden, sondern diese können auch verkürzt werden; beides Vorteile, die sich bei Regelung der Formschließeinheit positiv auswirken. Die Auflösung des bisherigen Abstützelements ermöglicht aber auch den Einsatz verschiedener Materialien für die stärker belasteten Abstützsegmente und den meist geringer beanspruchten Hydraulikblock. Die Materialien können daher sowohl unter Gesichtspunkten der Vereinfachung der Herstellung als auch der statischen Dimensionierung miteinander gepaart werden. Gleichzeitig werden durch diese Aufteilung auch die Voraussetzungen für eine erhöhte Modularität unter Einsatz ein- und desselben Hydraulikverteilers in Verbindung mit verschiedensten Abstützsegmenten geschaffen.

Werden die Abstützsegmente bei einer Ausgestaltung nach Anspruch 3 symmetrisch ausgestaltet, trägt dies ebenfalls zur Erhöhung der Modularität bei, da identisch aufgebaute, einfache Teile bedarfsweise ausgetauscht werden können. Gleichzeitig wird der Transport von Ersatzteilen auch in entfernte Länder erleichtert.

Bei einer Ausgestaltung nach den Ansprüchen 4 und 5 ergibt sich ein Kraftfluß dahingehend, daß Kräfte im wesentlichen innerhalb des jeweiligen Anschlußsegments übertragen werden, ohne daß eine stärkere Beanspruchung im Bereich des Hydraulikblocks erfolgt, der allenfalls bei einer Ausgestaltung nach Anspruch 8 vom Ausgleichszylinder mit Kräften beaufschlagt wird.

Die gewünschte Modularität kann bei einer Ausgestaltung nach Anspruch 6 dadurch gesteigert werden, daß der Hydraulikblock über Anschlußbereiche verfügt, die mit Anschlußbereichen der Anschlußsegmente zusammenwirken, wobei es gleichgültig ist, wie die Anschlußsegmente im übrigen aussehen. Dadurch paßt der Hydraulikblock zu jedem beliebigen Anschlußsegment, sofern dieses nur über den geeigneten Anschlußbereich verfügt, was sowohl die Kosten bei der Produktion senkt als auch dazu beiträgt, die Lagerhaltung beim Hersteller im Hinblick auf den Hydraulikblock zu reduzieren.

### Kurzbeschreibung der Figuren

- Fig. 1: Eine Seitenansicht der auf einem Maschinenfuß angeordneten Formschließeinheit,
- Fig. 2: eine teilweise geschnittene Draufsicht auf Abstützelement und beweglichen Formträger,
- Fig. 3: einen teilweise geschnittenen, vergrößerten Ausschnitt aus Fig. 3 im Bereich des Abstützelements,
- Fig. 4: eine Ansicht des Abstützelements gemäß Fig. 1 von links,
- Fig. 5: eine Ansicht der Formschließeinheit gemäß Fig. 1 von links mit ausgeschwenktem Abstützsegment.

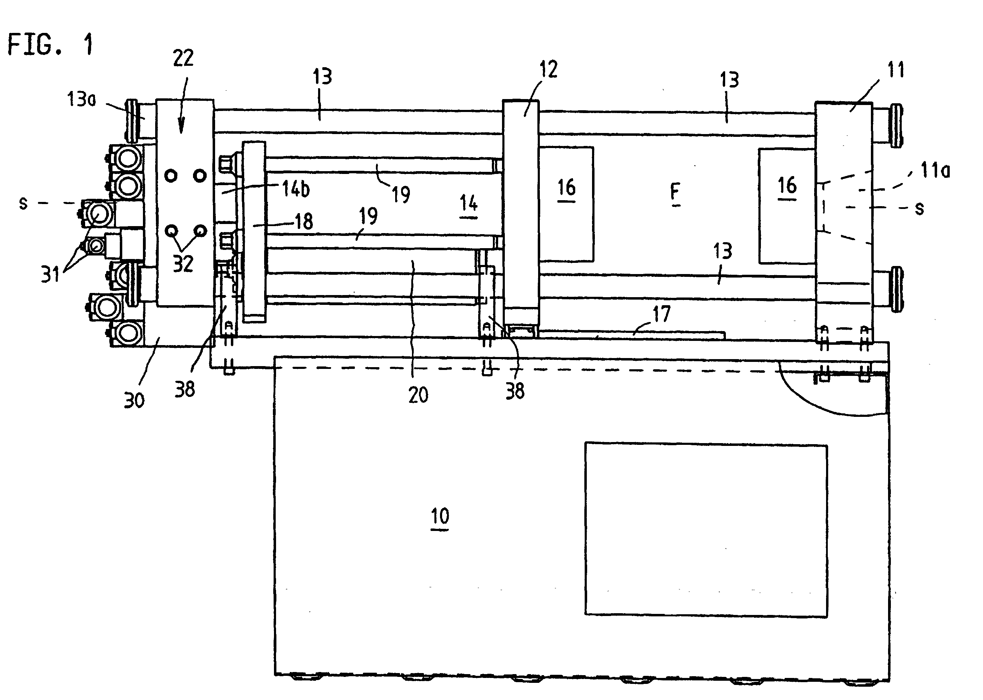

Fig. 1 zeigt die auf einem Maschinenfuß 10 befindliche Formschließeinheit. Die Formschließeinheit umfaßt einen stationären Formträger 11, einen beweglichen Formträger 12 sowie ein Abstützelement 22, die im vorliegenden Fall über Befestigungsmittel mit dem Maschinenfuß verbunden sind. Beweglicher Formträger 12 und stationärer Formträger 11 bilden zwischen sich einen Formspannraum F zur Aufnahme einer Gießform 16 aus. Über eine Ausnehmung 11a im stationären Formträger 11 kann in die geschlossene Gießform 16 von einer zeichnerisch nicht dargestellten Spritzgießeinheit eine plastifizierbare Masse wie z.B. Kunststoff oder eine pulverförmige oder keramische Masse eingespritzt werden.

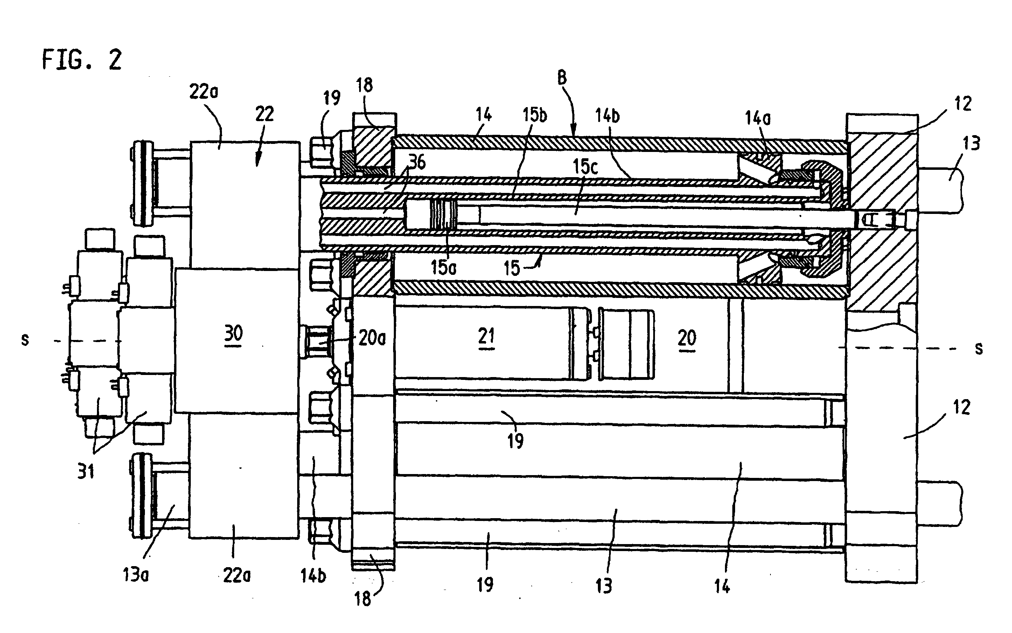

Abstützelement 22, beweglicher Formträger 12 und stationärer Formträger 11 sind von Holmen 13 durchgriffen, die vorzugsweise einer den beweglichen Formträger 12 umfassenden Bewegungseinheit B (Fig. 2) als Führung dienen. Während der Bewegung des beweglichen Formträgers 12 in und außer Schließposition der Gießform ist dieser auf einer Führungsbahn 17 zusätzlich geführt. Anstelle der Holme 13 besteht grundsätzlich jedoch auch die Möglichkeit, in bekannter Weise Kraftübertragungselemente in Form eines C-Bügels vorzusehen, die die beim Formschluß und beim Aufbringen der Zuhaltekraft entstehenden Kräfte um den Formspannraum F herumleiten. In diesem Fall wird dann auch die Brücke 38, die hier die Formschließeinheit am Maschinenfuß abstützt, so ausgestaltet sein, daß von der Formschließeinheit nach Möglichkeit keine Kräfte in den Maschinenfuß 10 eingeleitet werden.

Fig. 2 verdeutlicht, daß wenigstens ein Druckzylinder 14, im Ausführungsbeispiel zwei Druckzylinder mit Druckkolben 14a am Ende einer Kolbenstange 14b zum Aufbau des Zuhaltedrucks vorgesehen sind. Ferner ist wenigstens eine Kolben-Zylinder-Einheit 15 vorgesehen, die für die Schließbewegung, also für das Bewegen des beweglichen Formträgers 11, in und außer Schließposition der Gießform 16 im Formspannraum F zuständig ist. Im Ausführungsbeispiel sind je zwei Holme 13 und die Kolbenstange 14b des Druckkolbens 14a, die zugleich den Fahrzylinder 15b der Kolben-Zylinder-Einheit bildet, mit dem Abstützelement 22 und damit mit den beiden - es können auch mehr als zwei sein - Abstützsegmenten 22a verbunden, während der Druckzylinder 14 und die Kolbenstange 15c mit Kolben 15a der Kolben-Zylinder-Einheit 15 mit dem beweglichen Formträger 12 verbunden sind. Selbstverständlich sind auch andere Anordnungen möglich, bei denen Fahrzylinder 15b und Kolbenstange 14b nicht mieinander identisch und/oder koaxial zueinander sind. Die Druckzylinder 14 sind rückseitig über einen Zylinderdeckel 18 verschlossen, der über Zuganker 19 mit dem beweglichen Formträger 12 verspannt ist, so daß beweglicher Formträger 12, Druckzylinder 14 und Zylinderdeckel 18 eine Bewegungseinheit B bilden. Dies ist im übrigen zusammen mit der Funktionsweise der hier dargestellten Formschließeinheit Gegenstand der DE 43 40 693 C2.

Das Abstützelement 22 dient der Abstützung sowohl der Kolben-Zylinder-Einheit 15 als auch eines der Teile von Druckkolben 14a oder Druckzylinder 14. Es kommt insofern nicht entscheidend auf die Anordnung von Kolben und Zylinder an, so daß deren Anordnung grundsätzlich auch umgekehrt werden kann. Vorteilhafterweise wird jedoch eine Anordnung wie in Fig. 2 dargestellt bevorzugt, bei der der Fahrzylinder 15b koaxial zur und in der Kolbenstange 14b angeordnet ist. Dem Abstützelement 22 ist ein Hydraulikblock 30 zur Versorgung von Hydraulikleitungen 37 innerhalb des Abstützelements 22 zugeordnet. Das Abstützelement 22 weist wenigstens zwei Abstützsegmente 22a auf, die zwischen sich den Hydraulikblock 30 aufnehmen. Um eine zuverlässige Abstützung zu gewährleisten, sind im Ausführungsbeispiel diese Abstützsegmente über Befestigungsmittel 32 mit dem Hydraulikblock 30 verbunden, wobei im Übergangsbereich zwischen Hydraulikblock 30 und Abstützsegment 22a Zentrierbuchsen 33 vorgesehen sind. Diese zentrale Anordnung zwischen den Abstützsegmenten 22a trägt dazu bei, die Leitungslänge zu verkürzen als auch den Aufwand zur Herstellung der Hydraulikleitungen innerhalb der Abstützsegmente 22a zu minimieren. Grundsätzlich soll erreicht werden, daß keine flexiblen Leitungen erforderlich sind und dennoch die Kräfte zuverlässig über die Abstützsegmente übertragen werden können. Wird jedoch der Kraftfluß im wesentlichen tatsächlich über die Abstützsegmente geleitet, kann auf die Art der Befestigung zwischen Hydraulikblock 30 und Abstützsegment 22a weniger Wert gelegt werden, wenngleich auch dann auf eine Vermeidung von flexiblen Leitungen geachtet werden sollte, die grundsätzlich dazu beitragen, die Regelgenauigkeit der Formschließeinheit zu beeinträchtigen.

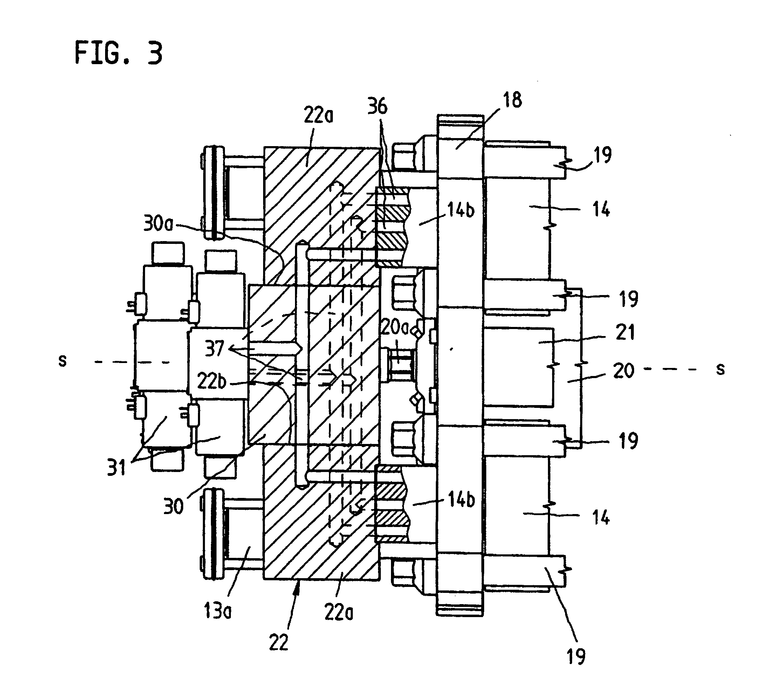

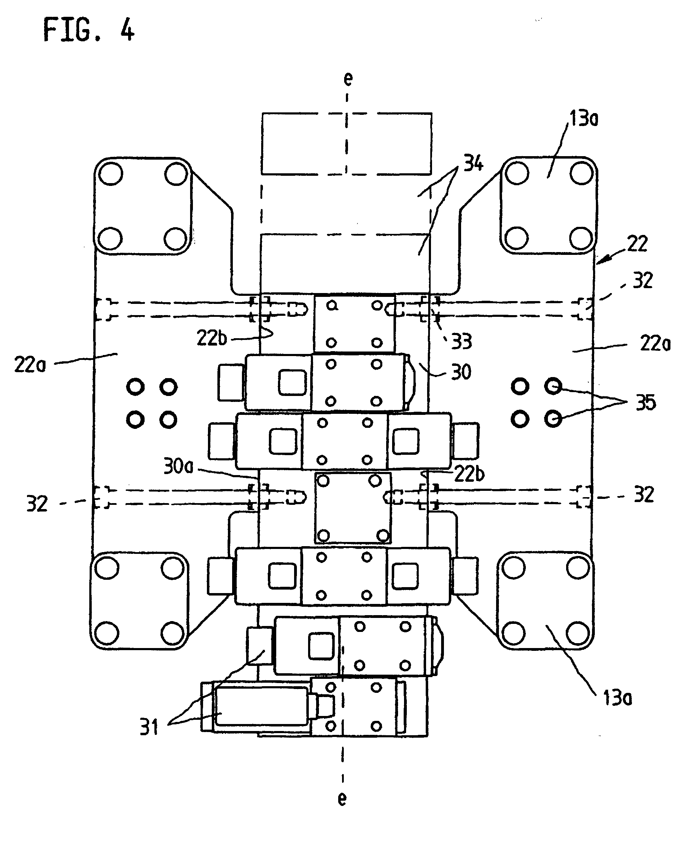

Gemäß Fig. 3 und 4 sind die Abstützsegmente 22a symmetrisch zu einer durch die Schließachse s-s gelegten vertikalen Ebene e-e angeordnet. Vorzugsweise sind auch die Hydraulikleitungen 37 symmetrisch zu dieser Ebene (Fig. 3). Jedem Abstützsegment 22a ist ein Druckzylinder 14 und eine Kolben-Zylinder-Einheit 15 zugeordnet, wobei hier auch Anordnungen möglich sind, bei denen z.B. jeweils zwei von vier Abstützsegmenten 22a je ein Druckzylinder und den anderen beiden Abstützsegmenten 22a eine Kolben-Zylinder-Einheit 15 zugeordnet ist. Im Ausführungsbeispiel ist jedes der beiden Abstützsegmente 22a mit zwei Holmen 13 und der Kolbenstange 14b des Druckkolbens 14a verbunden, die zugleich der Fahrzylinder 15b der Kolben-Zylinder-Einheit 15 ist. Diese Anordnung trägt dazu bei, daß der Kraftfluß im wesentlichen innerhalb des einzelnen Abstützsegments links und rechts vom Hydraulikblock 30 gehalten werden kann. Der Hydraulikblock 30 wird daher lediglich noch durch die von der unter den Druckzylindern 14 angeordneten Ausgleichskolben-Zylinder-Einheit 20 beansprucht.

Gemäß Fig. 4 weist der Hydraulikblock 30 beidseits Anschlußbereiche 30a auf, an denen er mit entsprechenden Anschlußbereichen 22b der Abstutzsegmente 22a in Verbindung steht. Werden diese Anschlußbereiche aufeinander abgestimmt, ist es gleichgültig, wie die Abstützsegmente 22a im Übrigen aussehen, so daß ein- und derselbe Hydraulikblock bei verschiedenen Maschinengrößen eingesetzt werden kann, was zu einer Erhöhung des modularen Aufbaus ebenso beiträgt, wie die identische und einfache Ausgestaltung der beiden Abstützsegmente 22a selbst. Der Anschlußbereich 22b befindet sich etwa in Höhe der Mitte zwischen den beiden Holmen 13, die über Abstützungen 13a an den Abstützsegmenten 22a angelegt sind. Die Länge dieses Anschlußbereichs 22b in vertikaler Richtung beträgt weniger als zwei Drittel des Abstands zwischen den Mitten der Holme 13. Dadurch ist es möglich, im Bereich oberhalb der Anschlußbereiche Raum für weitere Hydraulikblöcke 34 vorzusehen, wenn z.B. weitere Zusatzfunktionen wie Kernzüge vorgesehen werden sollen. Die Ansicht gemäß Fig. 4 verdeutlicht im übrigen die Anordnung der hydraulischen Schaltelemente 31 hinter dem Hydraulikblock 30.

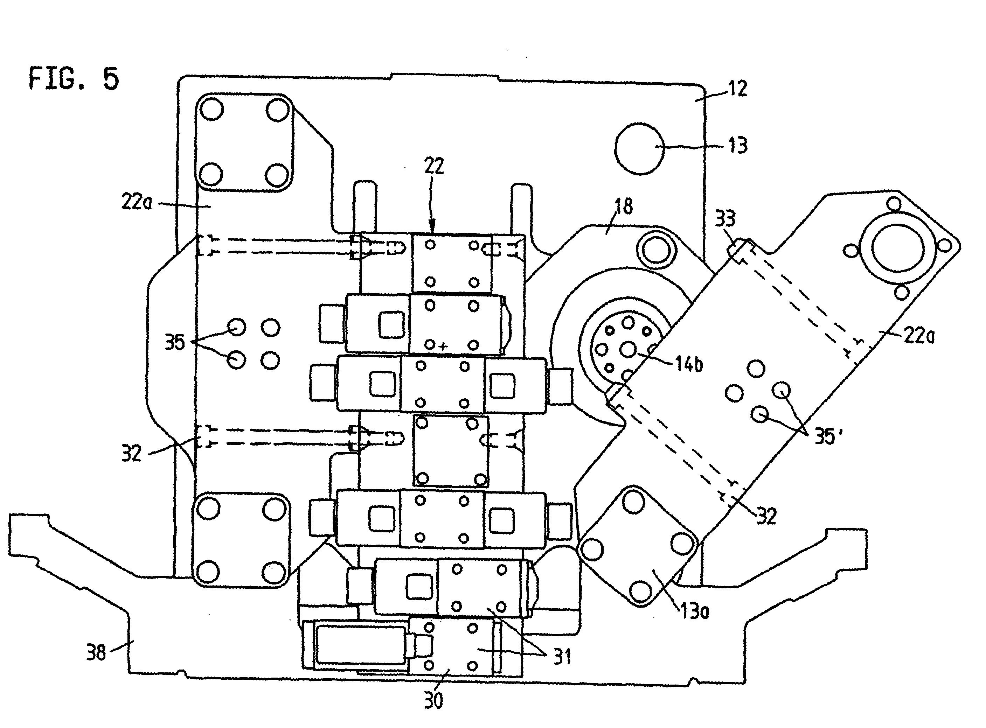

Grundsätzlich können zwischen Hydraulikblock 30 und Abstützsegmenten 22a auch Undichtigkeiten auftreten. Um hier einen leichten Zugang im Wartungsfalle zu gewährleisten, kann jedoch, wie in Fig. 5 dargestellt, das Abstützsegment 22a um einen Holm 13 als Schwenkachse ausgeschwenkt werden. Hierzu ist es erforderlich, die Kolbenstangenbefestigungen 35 der Kolbenstange 14b zu lösen und aus den Bohrungen 35' (Fig. 5) zu entfernen. Ferner muß der obere Holm 13 zurückgezogen werden, so daß dann bei entsprechender Lockerung im Bereich des unteren Holms das Ausschwenken ermöglicht ist.

## Patentansprüche

1. Formschließeinheit für eine Spritzgießmaschine zur Verarbeitung von Kunststoffen und anderen plastifizierbaren Massen mit
- einem stationären Formträger (11) und einem beweglichen Formträger (12), die zwischen sich einen Formspannraum (F) ausbilden,
- wenigstens einem Druckzylinder (14) mit Druckkolben (14a) und Kolbenstange (14b) zum Aufbau des Zuhaltedrucks,
- wenigstens einer Kolben-Zylinder-Einheit (15) zum Bewegen des beweglichen Formträgers (11) in und aus der Schließposition einer Gießform (16) im Formspannraum (F),
- wenigstens einem Abstützelement (22) zur Abstützung der Kolben-Zylinder-Einheit (15) und Kolbenstange (14b) oder Druckzylinder (14), wobei im Abstützelement (22) Hydraulikleitungen (37) vorgesehen sind,
- einem dem Abstützelement (22) zugeordneten Hydraulikblock (30) zur Versorgung der Hydraulikleitungen (37) mit Hydraulikmedium,
**dadurch gekennzeichnet, daß** das Abstützelement (22) wenigstens zwei Abstützsegmente (22a) aufweist, die zwischen sich den Hydraulikblock (30) aufnehmen und mit diesem über Befestigungsmittel (32) verbunden sind.

2. Formschließeinheit nach Anspruch 1, **dadurch gekennzeichnet, daß** die Abstützsegmente (22a) von vorzugsweise zwei Holmen (13) durchgriffen sind, die vorzugsweise der den beweglichen Formträger (12) umfassenden Bewegungseinheit (B) zugleich als Führungen dienen.

3. Formschließeinheit nach Anspruch 1, **dadurch gekennzeichnet, daß** die Abstützsegmente (22a) symmetrisch zu einer durch die Schließachse (s-s) gelegten vertikalen Ebene (e-e) angeordnet sind, wobei vorzugsweise auch die Hydraulikleitungen (37) symmetrisch zu dieser vertikalen Ebene (e-e) angeordnet sind.

4. Formschließeinheit nach Anspruch 1, **dadurch gekennzeichnet, daß** jedem Abstützsegment (22a) ein Druckzylinder (14) und/oder eine Kolben-Zylinder-Einheit (15) zugeordnet ist.

5. Formschließeinheit nach Anspruch 4, **dadurch gekennzeichnet, daß** mit jedem der beiden Abstützsegmente (22a) zwei Holme (13) und die Kolbenstange (14b) des Druckkolbens (14a) verbunden sind, die zugleich den Fahrzylinder (15b) bildet, der vorzugsweise koaxial zur und in der Kolbenstange (14b) angeordnet ist.

6. Formschließeinheit nach Anspruch 2, **dadurch gekennzeichnet, daß** der Hydraulikblock (30) beidseits Anschlußbereiche (30a) aufweist, die mit entsprechenden Anschlußbereichen (22b) der Abstützsegmente (22a) zusammenwirken, die von der restlichen Form der Anschlußsegmente unabhängig sind.

7. Formschließeinheit nach Anspruch 2 und 6, **dadurch gekennzeichnet, daß** der Anschlußbereich (22b) der Abstützsegmente (22a) etwa in Höhe der Mitte zwischen den beiden Holmen (13) je Seite der Formschließeinheit angeordnet ist und daß seine Länge in vertikaler Richtung weniger als zwei Drittel des Abstands zwischen den Mitten der Holme (13) beträgt.

8. Formschließeinheit nach Anspruch 1, **dadurch gekennzeichnet, daß** am Hydraulikblock (30) eine Ausgleichskolben-Zylinder-Einheit (20) abgestützt ist.

9. Formschließeinheit nach Anspruch 1, **dadurch gekennzeichnet, daß** zu Wartungszwecken die Abstützsegmente (22a) unter Ausnutzung eines Holms (13) als Schwenkachse ausschwenkbar sind.

## Claims

1. Mould-closing unit for an injection moulding machine for processing plastics materials and other plasticizable masses, comprising
- a stationary mould carrier (11) and a mobile mould carrier (12) which form between them a mould tentering space (F),
- at least one pressure cylinder (14) with pressure piston (14a) and piston rod (14b) to build up the locking pressure,
- at least one piston-cylinder unit (15) to move the mobile mould carrier (11) in and out of the closed position of a mould (16) in the mould tentering space (F),
- at least one support element (22) to support the piston-cylinder unit (15) and piston rod (14b) or pressure cylinder (14), hydraulic lines (37) being provided in the support element (22),
- a hydraulic block (30), allocated to the support element (22), to supply the hydraulic lines (37) with hydraulic medium,
**characterized in that** the support element (22) has at least two support sections (22a) which accommodate between them the hydraulic block (30) and are connected to the latter via fastening means (32).

2. Mould-closing unit according to claim 1, **characterized in that** the support sections (22a) are penetrated by preferably two bars (13), which simultaneously serve as guides for the movement unit (B) incorporating the mobile mould carrier (12).

3. Mould-closing unit according to claim 1, **characterized in that** the support sections (22a) are disposed symmetrically to a vertical plane (e-e) laid through the closing axis (s-s), the hydraulic lines (37) being preferably also disposed symmetrically to this vertical plane (e-e).

4. Mould-closing unit according to claim 1, **characterized in that** there is allocated to each support section (22a) a pressure cylinder (14) and/or a piston-cylinder unit (15).

5. Mould-closing unit according to claim 4, **characterized in that** two bars (13) and the piston rod (14b) of the pressure piston (14a) are connected to each of the two support sections (22a), the rod forming simultaneously the moving cylinder (15b) which is disposed preferably coaxially to and in the piston rod (14b).

6. Mould-closing unit according to claim 2, **characterized in that** the hydraulic block (30) has on both sides connecting regions (30a) which co-operate with corresponding connecting regions (22b) of the support sections (22a), which are independent of the remaining shape of the connecting sections.

7. Mould-closing unit according to claim 2 and 6, **characterized in that** the connecting region (22b) of the support sections (22a) is disposed roughly at the level of the centre between the two bars (13) per side of the mould-closing unit and **in that** its length in the vertical direction amounts to less than two-thirds of the spacing between the centres of the bars (13).

8. Mould-closing unit according to claim 1, **characterized in that** a balancing piston-cylinder unit (20) is supported on the hydraulic block (30).

9. Mould-closing unit according to claim 1, **characterized in that** the support sections (22a) may be swivelled out for maintenance purposes, using a bar (13) as the pivot axis.

## Revendications

1. Unité de fermeture de moule pour une machine à mouler par injection pour le traitement de matières plastiques et d'autres pâtes plastifiables, comportant
- un porte-moule fixe (11) et un porte-moule mobile (12) qui forment entre eux un espace de serrage de moule (F),
- au moins un cylindre de pression (14) avec piston de pression (14a) et tige de piston (14b) pour constituer la pression de verrouillage,
- au moins une unité à cylindre et piston (15) pour déplacer le porte-moule mobile (11) dans et depuis la position de fermeture d'un moule de coulée (16) dans l'espace de serrage de moule (F),
- au moins un élément d'appui (22) pour soutenir l'unité à cylindre et piston (15) et la tige de piston (14b) ou le cylindre de piston (14), des conduites hydrauliques (37) étant prévues dans l'élément d'appui (22),
- un bloc hydraulique (30) associé à l'élément d'appui (22) pour alimenter les conduites hydrauliques (37) en fluide hydraulique,
**caractérisée en ce que** l'élément d'appui (22) comporte au moins deux segments d'appui (22a) qui reçoivent entre eux le bloc hydraulique (30) et sont reliés à celui-ci par des moyens de fixation (32).

2. Unité de fermeture de moule selon la revendication 1, **caractérisée en ce que** les segments d'appui (22a) sont traversés de préférence par deux longerons (13) qui servent en même temps de préférence de guides à l'unité de déplacement (B) comprenant le porte-moule mobile (12).

3. Unité de fermeture de moule selon la revendication 1, **caractérisée en ce que** les segments d'appui (22a) sont disposés symétriquement par rapport à un plan vertical (e-e) passant par l'axe de fermeture (s-s), les conduites hydrauliques (37) étant disposées aussi de préférence symétriquement à ce plan vertical (e-e).

4. Unité de fermeture de moule selon la revendication 1, **caractérisée en ce qu'**à chaque segment d'appui (22a) est associé un cylindre de pression (4) et/ou une unité à cylindre et piston (15).

5. Unité de fermeture de moule selon la revendication 4, **caractérisée en ce qu'**à chacun des deux segments d'appui (22a) sont reliés deux longerons (13) et la tige de piston (14b) du piston de pression (14a), qui forme en même temps le cylindre de déplacement (15b), lequel est disposé de préférence coaxialement à la tige de piston (14b) et dans celle-ci.

6. Unité de fermeture de moule selon la revendication 2, **caractérisée en ce que** le bloc hydraulique (30) présente des deux côtés des zones de raccordement (30a) qui coopèrent avec des zones de raccordement (22b) correspondantes des segments d'appui (22a), qui sont indépendants du reste de la forme des segments de raccordement.

7. Unité de fermeture de moule selon les revendications 2 et 6, **caractérisée en ce que** la zone de raccordement (22b) des segments d'appui (22a) est disposée approximativement à la hauteur du milieu entre les deux longerons (13) de chaque côté de l'unité de fermeture de moule, et **en ce que** sa longueur, dans la direction verticale, est inférieure à deux tiers de la distance entre les milieux des longerons (13).

8. Unité de fermeture de moule selon la revendication 1, **caractérisée en ce que** sur le bloc hydraulique (30) est soutenue une unité à cylindre et piston de compensation (20).

9. Unité de fermeture de moule selon la revendication 1, **caractérisée en ce qu'**à des fins d'entretien, les segments d'appui (22a) peuvent pivoter vers l'extérieur en utilisant un longeron (13) comme axe de pivotement.
